# EUROPEAN PATENT APPLICATION

(11) **EP 0 901 783 A2**
(43) Date of publication of application: **17.03.1999**
(21) Application number: 98115399.2
(22) Date of filing: 17.08.1998
(51) Int. Cl.: A61G 3/06

(54) **Access facilities for vehicles**

(30) Priority: 22.08.1997 GB 9717787
(71) Applicant: LTI Limited, Coventry CV5 8JJ (GB)
(72) Inventor: Osmond, Edward, Solihull, Birmingham, B92 0BS (GB)
(74) Representative: Cookson, Barbara Elizabeth

(57) **Abstract**

A ramp for providing access at a passenger door of a vehicle comprises a ramp member (2) pivotally mounted adjacent a door of the vehicle at a base of a recess (10)in the floor. An extension member (4) is foldably connected to the ramp member and also fits within the recess in a storage position. In order to allow the ramp to reach the ground at a predetermined slope whether or not a kerb (12) is present a second detachable extension member (20) is provided which can be coupled when necessary to an edge (30) of the first extension member (4). The second detachable extension member has an alternative use as a step. When in use as a step it is fitted into guide tracks (62) adjacent the door where it is held in a horizontal position.

## Description

### Technical Field

The present invention relates to an access facility for vehicles, in particular taxi vehicles, private hire cars and private cars enabling wheelchair bound persons to enter and exit vehicles more easily.

### Background of the Invention

For many years some vehicles have been specifically designed to accommodate wheelchair bound passengers. More recently standard vehicles have been adapted so as to permit relatively easy carriage of wheelchair bound passengers. Where such a vehicle is adapted to receive a wheelchair bound passenger, generally it is desirable to provide some form of ramp for wheelchair access as the height of the step up from the ground to the vehicle door sill is normally too great to be conveniently negotiable directly.

According to the invention described and claimed in GB-B-2,268,133, a vehicle, which comprises a floor structure and a body affording a doorway with an access door, is provided with a wheelchair access system comprising an open-topped recess formed in said floor structure adjacent to said doorway, and a ramp member hingedly carried by said floor structure so as to be pivotal between a storage position and an operative position. When the ramp member is in said storage position it is housed within said recess and forms part of the surface of the floor structure which is substantially flush with the adjacent floor surface. In the operative position it extends externally of the vehicle so as to afford an external ramp surface which extends at a downward inclination from said recess at least partially towards the ground. The recess also defines an internal ramp surface which is inclined downwardly and outwardly and forms an inboard extension of the external ramp surface provided by the ramp member in its operative position, and serves as a temporarily lowered floor section adjacent to said doorway so as to create increased headroom in the doorway. An extension member foldably connected to the ramp member is also described. When in an operative position, the extension member forms an outboard extension of the external ramp surface, and when in a storage position the extension member forms part of the floor surface adjacent to the door. With such an arrangement the ramp which is formed when the extension member is in its operative position comprises three sections, namely an inboard section comprising the recess in which the ramp member is stored when in its storage position, the ramp surface of the ramp member which is effectively continuous with said inboard section, and an extension member formed as an extension of said ramp member.

Such an arrangement is entirely satisfactory for use where the vehicle is located alongside a kerb at the edge of a footpath raised above the level of the roadway by typically 10 to 15cm. However, where no such raised footpath is available, the overall length of the ramp may not be such as to enable the extension member to reach the ground if the inclination of the ramp is restricted, or if there is no restriction on the inclination and the extension member is allowed to drop freely to the ground, the inclination of the ramp may be inconveniently steep for the wheelchair access.

In addition by the year 2000 all licensed public carriage vehicles will need to be able to carry wheelchair bound persons under a legal obligation. It is therefore necessary for all such vehicles to provide for easy access to wheelchair bound passengers under all circumstances particularly where there is no raised footpath adjacent to the vehicle as in a private drive. It is necessary that any design of apparatus for facilitating wheelchair bound passengers should be safe for the passenger to use and easy and convenient for the taxi driver to operate.

### Summary of the Invention

In accordance with the present invention, a ramp for providing access at a passenger door of a vehicle comprises a recess in a floor of the vehicle adjacent the door having a base inclined downwardly towards the door; a ramp member having a first edge pivotally mounted adjacent the door in the base of the recess; an extension member foldably connected to a second edge of the ramp member by a first edge thereof and adapted to lie over said ramp member in a storage position in said recess to form part of the floor of the vehicle adjacent the door; and is characterised in that the ramp further comprises a second detachable extension member having a first edge adapted to couple with a second edge of the first extension member

The advantage of this invention is that the ramp with the optional use of the second detachable extension member is capable of providing easy access to the vehicle in all situations, particularly where there is not a kerb present adjacent to the vehicle.

Preferably the second detachable extension member has a support member adjacent the first edge thereof adapted to rest on the ground and control the slope of the ramp when in an operative position. This support member may be rigidly connected to an underside of the second detachable extension member. This provides sufficient support for the first extension member of the ramp allowing overall extension downwardly at pre-determined uniform slope.

In a preferred embodiment, the ramp may be adapted so that the support member is pivotally connected to an underside of the second detachable extension member. This allows for movement between a storage position in which the support member lies substantially parallel with the second detachable extension member and an operative position in which it is locked substantially perpendicular thereto. This has the advantage that the second detachable extension member, when in storage, takes up less space.

The second detachable extension member of the ramp may be adapted for use as a step, in which case the vehicle is provided with locating means beneath the door of the vehicle to receive a second edge of the second detachable extension member. This provides a step, approximately mid-way between the sill of the door and the ground, giving easier access for persons entering and exiting the vehicle who suffer mobility difficulties.

The second detachable extension member of the ramp preferably comprises a stop member fitted for movement between a retracted position and an extended position. In the extended position it projects into the path of closure of the door in order to prevent the door being closed while the second detachable extension member is in use as a step. This is important as it would present a safety hazard if the second detachable extension were left in place as a step, with the door closed, and the vehicle was in state of motion. The stop member causes the door to remain open at all times the step is in place to prevent the driver forgetting to remove it. This removes a potential safety hazard.

Preferably the means for coupling the first edge of the second detachable extension member, to a second edge of the first extension member, consists of a downwardly depending rib along the second edge and an upwardly open channel along the first edge of the second detachable extension member into which the rib seats. The advantage of such an arrangement is to resist separation from the second detachable extension member in a longitudinal direction and yet be easy to couple the members.

The ramp is preferably manufactured from any light-weight, resilient and corrosion resistant material such as aluminium. This has the advantage that it does not add significant weight to the vehicle while being easy to use and strong enough to be exposed to repeated loads.

### Brief Description of the Drawings

In order that the invention may be well understood an embodiment thereof will now be described, by way of example only, with reference to the accompanying diagrammatic drawings, in which:
- Figure 1: is a diagrammatic side view of an embodiment of the ramp with the second detachable extension member in place as an extension and also showing the ramp in its storage position;
- Figure 2: is a partially fragmented perspective view of the second detachable extension member;
- Figure 3: is a diagrammatic side view of the second detachable extension member in use as a temporary step.

### Description of a Preferred Embodiment

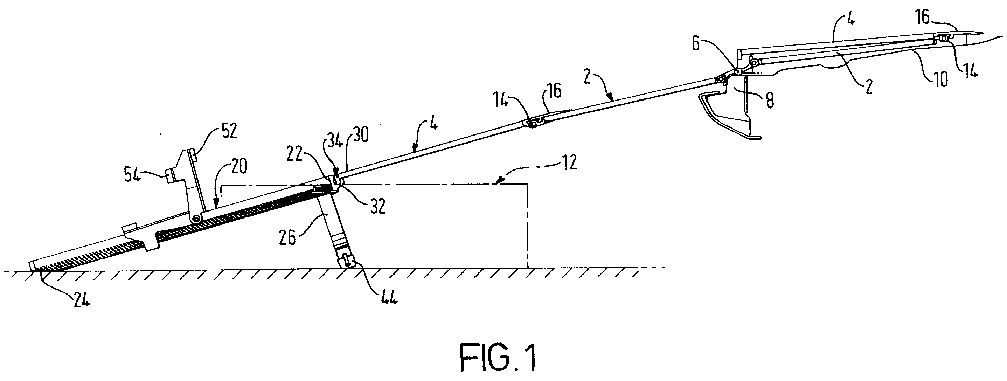

A ramp as shown in Figure 1 comprises a ramp member 2, which is foldably connected to a first extension member 4. The ramp member 2 is connected by means of a pivotal coupling 6 to a sill of a vehicle 8. Figure 1 shows the ramp both in its storage position in a recess 10 in the floor of the vehicle and in an extended position. Such arrangement is adequate where the vehicle is adjacent to a kerb 12 and is an example of the type of ramp described in detail in GB-B-2,268,133.

Both the ramp member 2 and the extension member 4 are plate like members having first and second edges. The first edge of the ramp member 2 is connected to the vehicle at the pivotal coupling 6. The second edge of the ramp member 2 is foldably connected to a first edge of the extension member 4 by means of a pivot 14. A projection 16 is also provided at the first edge of the extension member 4 in order to a lie over a second edge of the ramp member in an operative position as shown in Figure 1 to provide a smooth transition between the surfaces of both the ramp 2 and the extension member 4.

In circumstances where there is not a kerb, a second detachable extension member 20 is used as shown in Figure 1. The second detachable extension member 20 is another plate like member having first and second edges 22, 24. A support member 26 is provided adjacent the first edge 22 and extends substantially perpendicular to a surface of the second detachable extension member in order to rest on the ground 28 in its operative position as shown in Figure 1.

In order to couple the first edge 22 of the second detachable extension member 20 to a second edge 30 of the first extension member 4, an upwardly open channel 32 is provided along the edge 22. A downwardly depending rib 34 is formed along the second edge 30 of the first extension member 4 which seats in the channel 32.

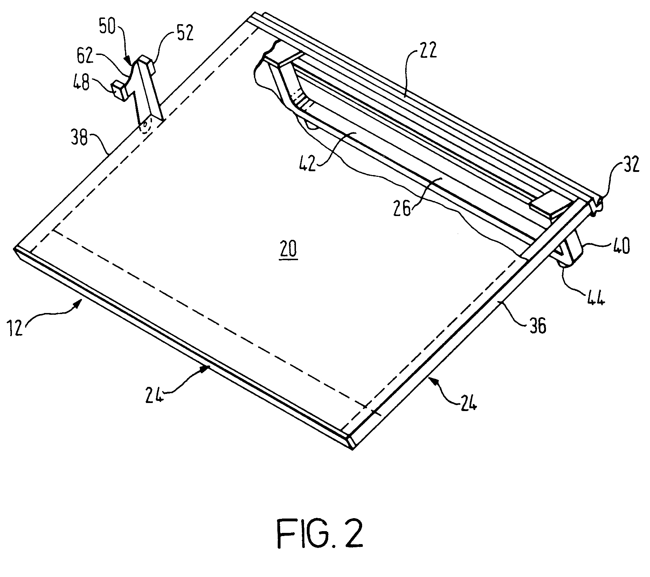

The second detachable extension member 20 is illustrated in Figure 2. It comprises a rectangular frame made up of cross members which define the first and second edges and opposed side members 36 and 38 which support a platform surface. The cross member at the second edge 24 comprises a profile adapted to rest against the ground.

The support member 26 is attached to the frame at the underside of the platform surface adjacent to the cross member at the first edge 22. In the illustrated embodiment the support member is formed as a broad U-shaped member with vertical legs 40 inter-connected at their lower ends by a transverse member 42. Downwardly projecting feet 44 are fitted at each end of the transverse member 42 adjacent the legs. In the illustrated embodiment, the support member 26 is fixedly secured to the frame, but it will be understood that it may alternatively be pivotally mounted so as to be capable of folding upwardly into engagement with the underside of the platform for storage purposes.

The side member 38 carries, approximately mid-way along its length, a pivoted stop member 50 which has a buffer 52 on one face thereof and a further offset buffer 54 on its opposite face. The stop member 50 is foldable as shown in Figure 1 between a retracted position on the side member 38 and an extended position substantially perpendicular thereto as shown in Figure 2.

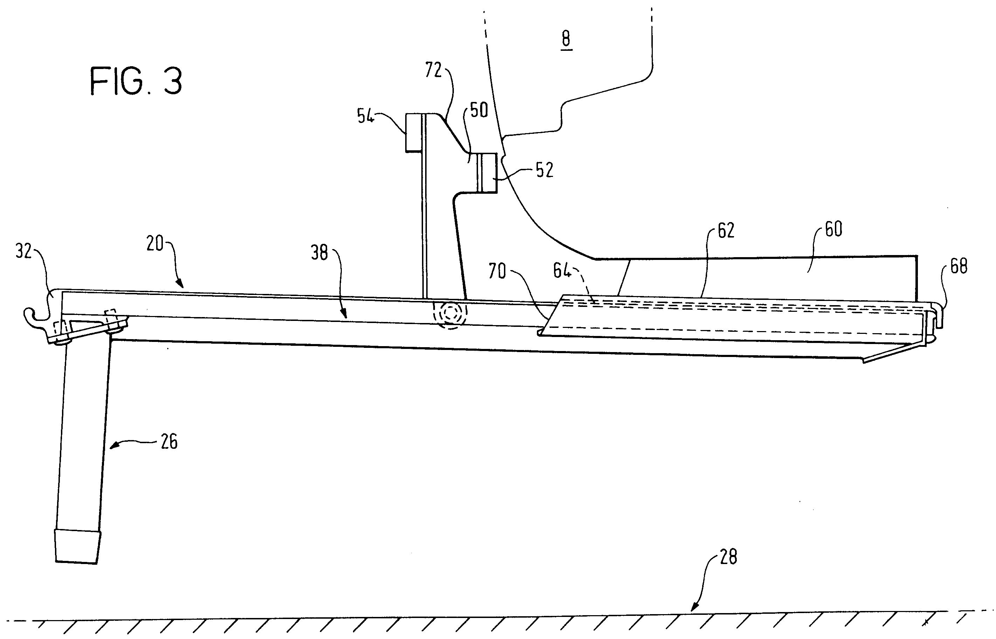

The second detachable extension member 20 can be used in two ways, namely either to form an outboard extension of the ramp, as illustrated in Figure 1, or to form a temporary step beneath the vehicle doorway as illustrated in Figure 3.

To enable the second detachable extension member 12 to be used as a temporary step, a supporting bracket 60 is secured at the underside of the vehicle as illustrated in Figure 3. The bracket 60 supports a pair of guide tracks 62 which are spaced apart in a parallel arrangement corresponding to the width of the second detachable extension member 20. The guide tracks 62 have a channel-shape in transverse section and are disposed with the open-mouths of the channels facing one another so as to receive slidably the side members 26, 38 of the second detachable extension member 20. At the innermost ends, upper limbs 64 of the channels are formed with a downward extension 68 which serves to limit the extent to which the member 20 can be inserted.

In this way, the member 20 is supported in cantilever with approximately half its platform surface projecting from beneath the underside of the vehicle to form a temporary step adjacent to the doorway, as illustrated in Figure 3.

The support member 26 is preferably dimensioned so as to remain clear of the ground 28 as shown in Figure 3, and may serve as a handle to facilitate insertion and removal of the member 26 into the guide tracks 62.

When the second detachable extension member 20 is in use as a temporary step, as illustrated in Figure 3, the stop member 50 is moved into its extended position, as illustrated. For this purpose, outer end edge 70 of at least the guide track 62 which receives the side member 38 that carries the stop member 50 is inclined inwardly and upwardly so as to serve as a cam face which is adapted to engage a corresponding inclined face 72 on the stop member 50 in order to displace the stop member upwardly if the user has not placed it manually in its extended position.

The buffer 52 carried by the stop member 50 faces the vehicle and is adapted to engage the sill of the doorway. This also limits the inward insertion of the second detachable extension member 20 into the guide tracks 62, and, if desired, may replace the downward extension 68.

As can be seen in the Figures, the buffer 54 faces outwardly and is disposed at a higher level than the buffer 52 so as to be in the path of closure of the door (not shown) and thereby prevent the door being closed when the second detachable extension member 20 is in use as a temporary step.

When the second detachable extension member 12 is not in use it may be stowed in a trunk of the vehicle, or in a compartment provided at any other appropriate location.

When the ramp is in operative position as illustrated in Figure 1, and it is intended for the second detachable extension member 20 to be used as well in order to maintain a safe incline of the ramp, the driver must take the second detachable extension member 26 and place it underneath the second edge of the first extension member 4 in order to trap the rib 34 in the channel 32. The second detachable extension member, which is now coupled of the ramp is dropped towards the road surface so that the support member 26 is touching the ground and the second edge 24 of the second detachable extension member 20 is also touching the ground 28. It will be understood that when the vehicle is parked alongside a kerb 12, the second edge 30 of the extension member 4 will rest directly on the raised surface bounded by the kerb 12, and the second detachable extension member 20 will not be required.

It will be appreciated that the components described can easily be fabricated from light-weight, resilient and corrosion resistant material such as aluminium.

## Claims

1. A ramp for providing access at a passenger door of a vehicle comprising a recess in a floor of the vehicle adjacent the door having a base inclined downwardly towards the door; a ramp member having a first edge pivotally mounted adjacent the door in the base of the recess; an extension member foldably connected to a second edge of the ramp member by a first edge thereof and adapted to lie over said ramp member in a storage position in said recess to form part of the floor of the vehicle adjacent the door; characterised in that the ramp further comprises a second detachable extension member having a first edge adapted to couple with a second edge of the first extension member.

2. A ramp as claimed in claim 1, wherein the second detachable extension member has a support member adjacent the first edge thereof adapted to rest on the ground and control the slope of the ramp when in an operative position.

3. A ramp as claimed in claim 2 wherein the support member is rigidly connected to an underside of the second detachable extension member.

4. A ramp as claimed in claim 2 wherein the support member is pivotally connected to an underside of the second detachable extension member for movement between a storage position in which it lies substantially parallel with the extension member and an operative position in which it is locked substantially perpendicular thereto.

5. A ramp as claimed in any one of the preceding claims, wherein the second detachable extension member is adapted for use as a step, the vehicle being provided with locating means beneath the door of the vehicle to receive a second edge of the second detachable extension member.

6. A ramp as claimed in any one of the preceding claims, further comprising a stop member fitted to the second detachable extension member for movement between a retracted position and an extended position in which it projects into the path of closure of the door in order to prevent the door being closed while the second detachable extension member is in use as a step.

7. A ramp as claimed in any one of the preceding claims, wherein the means for coupling the first edge of the second detachable extension member to a second edge of the first extension member comprises a downwardly depending rib along the second edge and an upwardly open channel along the first edge of the second detachable extension member into which the rib seats.

8. A ramp as claimed in any one of the preceding claims, made from a light-weight, resilient and corrosion resistant material such as aluminium.
